# EUROPÄISCHE PATENTANMELDUNG

(11) **EP 1 375 453 A2**
(43) Veröffentlichungstag der Anmeldung: **02.01.2004**
(21) Anmeldenummer: 03013688.1
(22) Anmeldetag: 17.06.2003
(51) Int. Cl.: C04B 35/83

(54) **Verfahren und Vorrichtung zum Herstellen eines Formlings**

(30) Priorität: 29.06.2002 DE 10229297
(71) Anmelder: Komage-Gellner Maschinenfabrik KG, 54427 Kell am See (DE)
(72) Erfinder: Seimetz, Hans Georg, Dipl.-Ing., 66687 Wadern-Wadrill (DE)
(74) Vertreter: Bernhardt, Winfrid, Dr.-Ing.

(57) **Zusammenfassung**

Verfahren zum Herstellen eines Formlings, insbesondere aus mit Kohlenstofffasern versetzter Kohlenstoffmasse mit einem wärmehärtbaren Bindemittel, bei dem der Formling in einer Pressform unter Druck durch Erwärmen verfestigt wird, dadurch gekennzeichnet, dass der Formling in sich selbst durch elektrische Widerstandsheizung erwärmt wird.

## Beschreibung

Die Erfindung betrifft ein Verfahren zum Herstellen eines Formlings, insbesondere aus mit Kohlenstofffasern versetzter Kohlenstoffmasse mit einem wärmehärtbaren Bindemittel,
bei dem der Formling in einer Pressform unter Druck durch Erwärmen verfestigt wird.

Ferner betrifft die Erfindung eine Vorrichtung zum Durchführen des Verfahrens, die in einem Pressengestell, insbesondere unter Zwischenanordnung einer Einbauvorrichtung, eine Pressform mit einer Matrize, mindestens einem Stempel und einem Gegenstück zu dem Stempel aufweist.

Ein solches Verfahren und eine solche Vorrichtung werden im Stand der Technik angewandt zur Herstellung von keramischen Bremsscheiben aus mit Kohlenstofffasern versetzten Kohlenstoffmassen mit wärmehärtbaren Bindemitteln. Die ausgehärteten Bindemittel werden später durch eine Wärmebehandlung in nichtoxidierender Atmos-phäre carbonisiert; meist wird anschließend durch Infiltration von flüssigem Silicium in den porösen Körper und erneute Wärmebehandlung die Kohlenstoffmasse unter Erhalt der Kohlenstofffasern ganz oder teilweise in Siliciumcarbid überführt.
Die erste Erhitzung noch unter Druck in der Pressform findet statt, um die Bindemittel jedenfalls so weit auszuhärten, dass die zusammengepresste, aufgrund ihres Faserbestandteils aber auseinanderstrebende Formmasse in einem Maße verfestigt wird, dass der Formling weiterbehandelt werden kann.

Die Bindemittel sind in der Regel thermisch aüshärtbare Harze wie Phenolharze.

Die erste Erhitzung zur Aushärtung des Bindemittels erreicht z.B. 170 bis 180°C oder mehr, die Verfestigung beginnt bei etwa 135°C. Die Carbonisierung wird bei ca. 750°C bis 1100°C durchgeführt.
Um die Erhitzung in der Pressform durchführen zu können, ist diese mit einem beheizbaren Unterstempel und einem beheizbaren Oberstempel versehen. Der flache Formling dazwischen - es werden zwei Halbscheiben gepresst und dann zusammengesetzt - verfestigt sich in etwa 45 min.

Der Erfindung liegt die Aufgabe zugrunde, die Verfestigung zu beschleunigen.

Gemäß der Erfindung wird dieser Zweck in der Weise erfüllt, dass der Formling in sich selbst durch elektrische Widerstandsheizung erwärmt wird.

Die erfindungsgemäße Vorrichtung ist dadurch gekennzeichnet, dass einander gegenüberliegende Teile der Pressform mindestens gegen das Pressengestell elektrisch isoliert sind und mit einer Stromquelle verbunden sind.

Die Aushärtungszeit des erwähnten Bremsscheiben-Formlings lässt sich damit auf 10 bis 15 min verkürzen, dies darüber hinaus bei einem einstückig gepressten Formling.
Zugleich bleibt die Struktur des Formlings gleichmäßiger als bei der Wärmeübertragung aus den Stempeln, da sich der Formling überall gleichzeitig erhitzt und er dabei gleichmäßig erweicht.

In der Regel werden die genannten Teile der Pressform ein Stempel und ein Gegenstück zu diesem, insbesondere ein Oberstempel und ein Unterstempel, sein.
Weist die Pressform zusätzlich zu der in aller Regel vorhandenen Matrize auch für die Herstellung eines ringförmigen Formlings einen Dorn auf, so könnte man im Prinzip auch zwischen der Matrize und dem Dorn Stromfluß erzeugen statt zwischen dem Stempel und seinem Gegenstück.

Die genannte Isolierung der mit der Stromquelle verbundenen Teile wird man möglichst schon gegen die, meist "Adapter" genannte. Einbauvorrichtung einrichten.

Andere Teile der Pressform wird man gleichfalls mindestens gegen das Pressengestell, vorzugsweise schon gegen die Einbauvorrichtung, isolieren oder man wird die Einbauvorrichtung insoweit in sich isolieren.

Soweit möglich, könnte man die anderen Teile auch in der Pressform gegen die mit der Stromquelle verbundenen Teile sowie gegen die Formmasse isolieren, beispielsweise durch abriebfeste keramische Beschichtungen.

Eine besonders vorteilhafte und zweckmäßige Ausgestaltung der Erfindung besteht in einer Pressform zum Herstellen eines, insbesondere flachen, Formlings, der Hohlräume und zwischen den Hohlräumen Stege aufweist, die im wesentlichen zwei Scheiben verbinden, unter Einsatz mindestens eines entfernbaren Kernes,
in der ein Unterstempel und ein Oberstempel die erstgenannten, mit der Stromquelle verbundenen Teile bilden und in diese jeweils ein, vorzugsweise nicht mit der Stromquelle verbundener, Segmentstempel integriert ist, der Stempelsegmente im wesentlichen von der Querschnittsform der genannten Stege aufweist, mit denen er verschiebbar in Ausnehmungen gleicher Querschnittsform des Unterstempels bzw. Oberstem pels greift,
wobei der Kern die genannten Hohlräume formende Kernsegmente aufweist und die Zwischenräume der Kernsegmente in der Pressform deckungsgleich mit den Stempelsegmenten angeordnet sind.

Bei dieser Anordnung wird der Strom nicht über den Stegen eingeleitet, durch die er, wenn der Kern nicht leitet, auf jeden Fall weiterfließen muß, sondern in den Bereichen daneben, die damit auch von dem Stromfluss voll erfasst werden.
Diese Führung des Stromflusses lässt sich besonders vollkommen erreichen bei schmalem, langgestrecktem Querschnitt der Stege und der Hohlräume in Form von Kanälen, wie er bei ringförmigen Formlingen von Bremsscheiben anzutreffen ist, die von ihrem Innenumfang zu ihrem Außenumfang durchgehende Lüftungskanäle zur Kühlung aufweisen.
Die oben erwähnte gleichzeitige Erhitzung und Erweichung und die daraus folgende Gleichmäßigkeit der Struktur des Formlings sind bei dem Formling mit den Hohlräumen und Stegen besonders vorteilhaft.

Der nichtleitende, zerstörbare Kern besteht bevorzugt aus einem pyrolisierbaren thermoplastischen Kunststoff, dessen Schmelzpunkt oberhalb der Aushärtungstemperatur des genannten Bindemittels liegt.
Der thermoplastische Kunststoff kann im Zuge der Carbonisierungsbehandlung aus dem Formling ausgeschmolzen und aufgefangen werden, z.B. bei 250 bis 280°C. Die aufgefangene Menge wird gesondert bei höherer Temperatur pyrolisiert.

Ein unter Auseinandernehmen aus dem Formling herausziehbarer Kern bestünde beispielsweise aus Aluminium oder Stahl. Seine Teile könnten am äußeren und am inneren Umfang des ringförmigen Kerns, ggf. auch im Inneren, lösbar verbunden und nach außen und nach innen herausziehbar sein. Dafür könnte man die Gestaltung der Hohlräume ein wenig ändern und anpassen. Die Teile des Kerns können mit einer isolierenden Beschichtung versehen sein, wenn der Kern nicht leiten soll.
Es hat sich jedoch gezeigt, dass eine genügende Erwärmung auch mit einem leitenden Kern aus Aluminium möglich ist. Der Kern erwärmt sich selbst und heizt die von ihm eingeschlossenen Stege durch Wärmeübergang auf.

Die Zeichnungen geben ein Ausführungsbeispiel der Erfindung wieder.

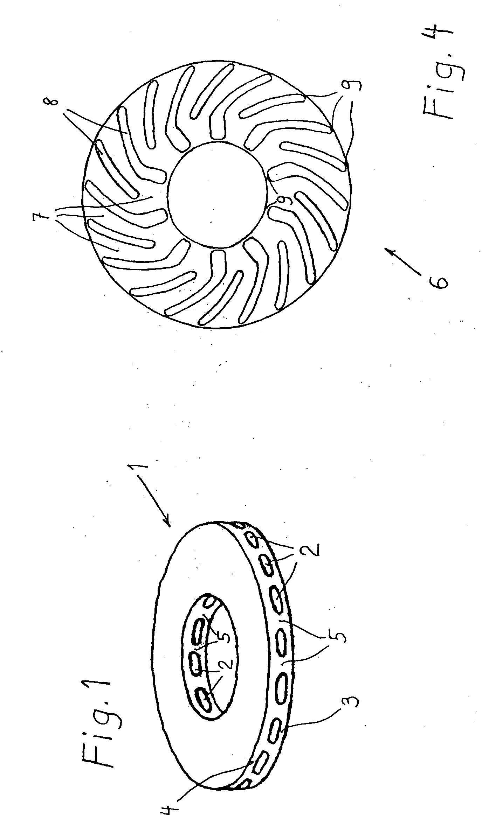

- Fig. 1: zeigt in isometrischer Darstellung einen Formling einer Keramik-Bremsscheibe,
- Fig. 2: zeigt in senkrechtem Schnitt den unteren Teil einer Pressenanordnung und einer Pressform,
- Fig. 3: zeigt in senkrechtem Schnitt den oberen Teil der Pressenanordnung und der Pressform und
- Fig. 4: zeigt einen Kern in Draufsicht.

Der herzustellende Formling ist mit 1 bezeichnet. Er hat eine flach-ringförmige Gestalt. In seiner Mitte, bezogen auf die Scheibendicke, verlaufen Kanäle 2 vom Innenumfang zum Außenumfang. Im Material besteht der Formling demgemäß aus zwei Scheiben 3 und 4, die durch zwischen den Kanälen 2 verbleibende Stege 5 verbunden sind.

Die Gestalt der Kanäle 2 und Stege 5 ist aus Fig. 4 ersichtlich. Der dort gezeigte Kern 6 weist die Kanäle 2 in Form von Kernsegmenten 7 und die Stege 5 in Form von Zwischenräumen 8 auf. Die Kernsegmente 7 sind am Innenumfang und am Außenumfang durch schmale Ringabschnitte 9 verbunden.

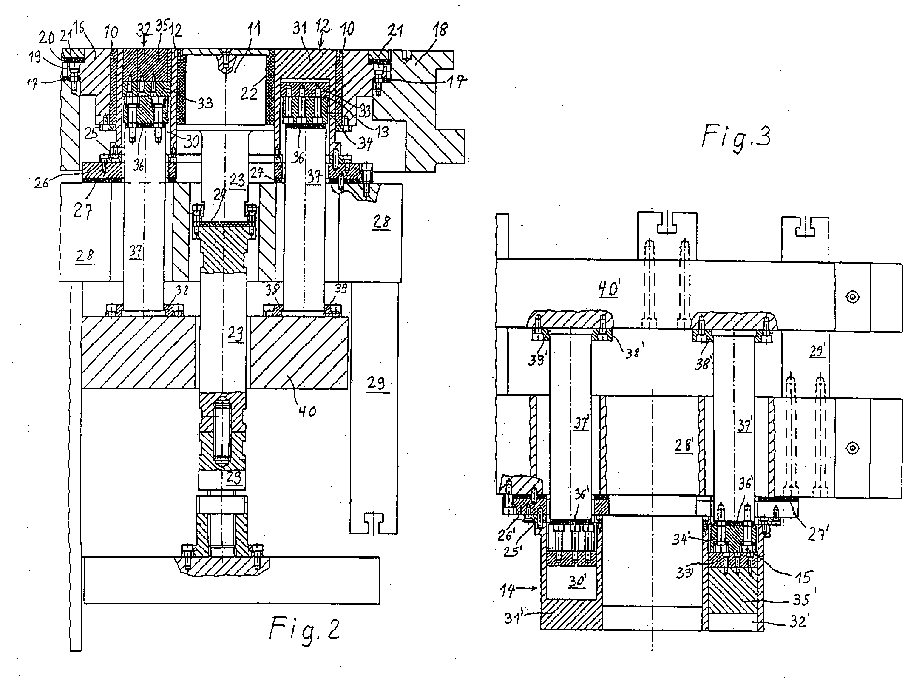

Die zur Herstellung des Formlings 1 angewandte Pressform setzt sich zusammen aus einer Matrize 10, einem Dorn 11, einem Unterstempel 12, einem unteren Segmentstempel 13, einem Oberstempel 14 und einem oberen Segmentstempel 15.
Die Teile 10 bis 13 erscheinen in Fig. 2, die Teile 14 und 15 in Fig. 3.

Die Matrize 10 hat die Form eines flachen Hohlzylinders und bildet die Außenwand der Pressform. Sie ist feststehend-angeordnet. Sie sitzt in der aus der Zeichnung ersichtlichen Weise in einem Haltering 16. Dieser ist unter Zwischenlegung einer Isolierscheibe 17 zur elektrischen Isolierung im feststehenden Matrizentisch gelagert. Die betreffende Verschraubung 19 ist durch eine weitere Isolierscheibe 20 und einen die Tischoberfläche schließenden Ring 21 abgedeckt.

Der Dorn 11 bildet als Gegenstück zu der Matrize 10 in gleicher Höhe wie diese die Innenwand der ringförmigen Pressform. Er ist als ein Zylinder aus Vollmaterial mit einem verschleißfesten Außenmantel 22 ausgebildet. Auch er ist feststehend angeordnet, und zwar auf einer mehrfach zusammengesetzten Säule 23 unter elektrischer Isolierung durch eine zwischen zwei Säulenabschnitten angeordnete Isolierplatte 24.

Der Unterstempel 12 füllt den Ringquerschnitt zwischen der Matrize 10 und dem Dorn 11 aus und ist in diesem auf und ab beweglich. Er ist über einen Verschraubungsring 25, eine Stromanschlussplatte 26 und eine Isolierscheibe 27 abgestützt auf und verschraubt mit einer Platte 28 der Presse, die durch vier Säulen 29 mit dem Unterstempel der Presse verbunden sind.
Der Unterstempel 12 ist aus Vollmaterial gearbeitet. Auf einem unteren, größeren Teil seiner Höhe weist er einen ringförmigen Hohlraum 30 auf. In dem darüber stehengebliebenen Vollmaterial 31 sind senkrecht durchgehende Schächte 32 herausgearbeitet. Die Schächte haben im waagerechten Querschnitt die gleiche Anordnung und etwa die gleiche Form wie die Zwischenräume 8 in dem Kern 6.

Der untere Segmentstempel 13 besteht aus zwei zusammengeschraubten Ringen 33 und 34 aus Vollmaterial und auf den oberen Ring 33 aufgesetzten und mit ihm verschraubten Stempelsegmenten 35. Der untere Ring 34 ist unter Zwischenlegung von Isolierplatten 36 auf vier Säulen 37 abgestützt und mit ihnen verschraubt. Die Säulen 37 stehen mit von einem Haltering 38 übergriffenen Füßen 39 auf einer weiteren Platte 40 der Presse. Die Platte 40 ist mit einem weiteren Unterstempel der Presse verbunden.

Die Ringe 33 und 34 finden Platz in dem Hohlraum 30 des Unterstempels 12. Die Segmente 35 ragen in die Schächte 32 und füllen deren Querschnitt. In der unteren Endstellung des Segmentstempels 15 bilden sie einen die Schächte 32 nach unten verschließenden Boden, in ihrer oberen Endstellung schließen sie bündig mit der Oberfläche des Unterstempels ab. Diese Stellung findet sich in Fig. 2.

Der Oberstempel 14 und der obere Segmentstempel 15 haben spiegelbildliche Ausbildung und Anordnung zu dem Unterstempel 12 und dem unteren Segmentstempel 13. Für die den Teilen 25 bis 40 entsprechenden Teile des Oberstempels 14 und des oberen Segmentstempels 15 sind die gleichen Bezugszeichen verwendet unter Hinzufügung von'.
Lediglich sind die Säulen 29' und 37' kleiner als die Säulen 25 bzw. 37 und mit Oberstempeln der Presse verbunden.

Die Stromanschlussplatten 26 und 26' sind an nicht gezeichneten Anschlüssen jeweils mit einer Vielzahl von Stromanschlussleitungen verbunden, die den Bewegungen des Unterstempels 12 bzw. Oberstempels 14 folgen können.

Die Teile 16,18,23,28,29,37-40,28',29',37'-40' sind Teile einer Einbauvorrichtung, mittels derer die Pressform 10-15 in an sich bekannter Weise in ein Pressengestell mit zwei Unterstempeln und zwei Oberstempeln sowie Füllschiebern für die Formmasse eingebaut ist.

Bei gegenüber der Oberseite der Matrize 10 zurückgezogenem Unterstempel 12 und gegenüber der Oberseite des Unterstempel 12 zurückgezogenem unteren Segmentstempel 13 wird Formmasse eingefüllt. Dabei wird durch die Füllung auch der Schächte 32 in dem Unterstempel 12 zusätzliche Formmasse an der Stelle der zu formenden Stege 5 eingebracht.
Darauf werden der Unterstempel 12 und der untere Segmentstempel 13 weiter zurückgezogen und es wird der Kern 6 eingelegt, wobei die Zwischenräume 8 der Kernsegmente 7 deckungsgleich mit den genannten Stempelsegmenten 35 angeordnet werden.
Nach weiterem Zurückziehen des Unterstempels 12 und des unteren Segmentstempels 13 wird erneut Formmasse eingefüllt. Auch die Zwischenräume der Kernsegmente werden dabei gefüllt.

Später werden der Oberstempel 14 und der obere Segmentstempel 15 abgesenkt und auf die Formmasse aufgelegt.
Dann wird unter Zurückziehen des oberen Segmentstempels 15 der untere Segmentstempel 13 vorgeschoben, bis im Unterstempel 12 und im Oberstempel 14 die Stempelsegmente 35,35' im wesentlichen gleichen Abstand von der Stempeloberfläche haben. Dabei werden, im wesentlichen noch ohne Verdichtung, Materialsäulen innerhalb der Füllung nach oben verschoben, nämlich aus den Schächten 32 im Unterstempel 12 in die Zwischenräume 8 der Kernsegmente 7 und aus diesen in die betreffenden Schächte 32' des Oberstempels. Am Ende dieses Schritts befindet sich in den Schächten 32,32' im wesentlichen gleich viel Formmasse über wie unter dem Kern 6.
Dann werden die Segmentstempel 13; 15 vorgeschoben, bis die Oberflächen der Stempelsegmente 35,35' bündig in den Stempeloberfiächen liegen. Dann oder ganz oder teilweise währenddessen werden der Unterstempel 12 und der Oberstempel 14 bis in ihre Endstellung vorgeschoben.

In diesem Zustand wird der Formling durch Anlegen einer Wechselspannung von z.B. 2 bis 3 V zwischen den Stromanschlussplatten 26 und 26' geheizt. Der Strom fließt aus der Stromanschlussplatte 26 in den Unterstempel 12, aus diesem in die untere Scheibe 3 des Formlings 1, dann durch die in den Zwischenräumen 8 des, nicht leitenden. Kerns 6 gebildeten Stege 5 des Formlings 1, aus diesen in die obere Scheibe 4 des Formlings 1 und weiter durch den Oberstempel 14 und dessen Stromanschlussplatte 26', bzw. umgekehrt.
Bestünde der Kern 6 aus Metall oder einem anderen leitenden Material, würde er, wie sich gezeigt hat, sich selbst erwärmen und die von ihm eingeschlossenen Stege 5 durch Wärmeübergang aufheizen.
Bei der weiter oben angegebenen Materialauswahl, d.h. mit Kohlenstofffasern versetzte Kohlenstoffmassen mit Bindemitteln aus Pechen und/oder thermisch aushärtbaren Harzen, haben die Formmasse 43 und die Reibbelagmasse 41 eine Leitfähigkeit. die ihre genügende Erhitzung ermöglicht, und die Bindemittel haben die Fähigkeit, bei der Erhitzung so weit auszuhärten, dass die zusammengepresste, aufgrund ihres Faserbestandteils aber auseinanderstrebende Formmasse genügend verfestigt wird, so dass der Formling 1 weiterbehandelt werden kann.
Die Stromstärke, die sich bei den angelegten 2 bis 3 V einstellt, schwankt infolge der Veränderungen innerhalb des Formlings in weiten Grenzen. Sie kann bis auf 15000 A steigen, besonders am Anfang, und später bis auf 100 A sinken.
Die Steuerung der Heizung erfolgt als Intervallsteuerung ausgehend von einer Temperaturmessung durch ein aus dem Dorn 11 in einen der Stege 5 vorgeschobenes Thermoelement.

Der verfestigte Formling 1 wird aus der Pressform ausgestoßen.

Der Kern 6 wird später in der weiter oben angegebenen Weise zerstört.

Statt des beschriebenen vollständigen Bremsscheiben-Formlings könnten auch die oben erwähnten, im Stand der Technik hergestellten Halbscheiben sowie vielerlei weitere Formlinge gepresst und nach der Erfindung verfestigt und später verbunden werden.

Es wäre auch denkbar, den Strom für die Erwärmung des Formlings in sich selbst induktiv in den Formling zu erzeugen. Beispielsweise könnte durch ein in oder an der Matrize umlaufendes Feld ein Wirbelstrom induziert werden.

## Patentansprüche

1. Verfahren zum Herstellen eines Formlings. insbesondere aus mit Kohlenstofffasern versetzter Kohlenstoffmasse mit einem wärmehärtbaren Bindemittel, bei dem der Formling in einer Pressform unter Druck durch Erwärmen verfestigt wird,
**dadurch gekennzeichnet,**
**dass** der Formling in sich selbst durch elektrische Widerstandsheizung erwärmt wird.

2. Vorrichtung zum Durchführen eines Verfahrens nach Anspruch 1, die in einem Pressengestell, insbesondere unter Zwischenanordnung einer Einbauvorrichtung (16,18,23,28,29,37-40,28',29',37'-40'), eine Pressform (10-15) aufweist,
**dadurch gekennzeichnet,**
**dass** einander gegenüberliegende Teile (14; 12) der Pressform mindestens gegen das Pressengestell elektrisch isoliert sind und mit einer Stromquelle verbunden (26;26') sind.

3. Vorrichtung nach Anspruch 2,
**dadurch gekennzeichnet,**
**dass** die genannten Teile (14;12) der Pressform ein Stempel (14) und ein Gegenstück (12) zu diesem, insbesondere ein Oberstempel (14) und ein Unterstempel (12), sind.

4. Vorrichtung nach Anspruch 2 oder 3,
**dadurch gekennzeichnet,**
**dass** die genannten Teile (14;12) gegen die Einbauvorrichtung (28' bzw. 28) isoliert (27' bzw. 27) sind oder die Einbauvorrichtung dementsprechend in sich isoliert ist.

5. Vorrichtung nach einem der Ansprüche 2 bis 4,
**dadurch gekennzeichnet,**
**dass** andere Teile (10;1 1;13;15) der Pressform (10-15) mindestens gegen das Pressengestell, vorzugsweise gegen die Einbauvorrichtung (37-40;37'-40'), isoliert (36;36') sind oder die Einbauvorrichtung (16,18) dementsprechend in sich isoliert (17) ist.

6. Vorrichtung nach einem der Ansprüche 2 bis 5,
**dadurch gekennzeichnet,**
**dass** andere Teile der Pressform in dieser gegen die erstgenannten Teile sowie gegen die Formmasse isoliert sind.

7. Vorrichtung nach einem der Ansprüche 2 bis 6,
**gekennzeichnet durch** eine Pressform (10-15) zum Herstellen eines, insbesondere flachen, Formlings (1), der Hohlräume (2) und zwischen den Hohlräumen (2) Stege (5) aufweist, die im wesentlichen zwei Scheiben (3;4) verbinden, unter Einsatz mindestens eines entfernbaren Kernes (6),
in der ein Unterstempel (12) und ein Oberstempel (14) die erstgenannten Teile bilden und in diese jeweils ein, vorzugsweise nicht mit der Stromquelle verbundener, Segmentstempel (13;15) integriert ist, der Stempelsegmente (35;35') im wesentlichen von der Querschnittsform der genannten Stege (5) aufweist, mit denen er verschiebbar in Ausnehmungen (32;32') gleicher Querschnittsform des Unterstempels (12) bzw. Oberstempels (14) greift,
wobei der Kern (6) die genannten Hohlräume (2) formende Kernsegmente (7) aufweist und die Zwischenräume (8) der Kernsegmente in der Pressform (10-15) deckungsgleich mit den Stempelsegmenten (35;35') angeordnet sind.

8. Vorrichtung nach Anspruch 7,
**dadurch gekennzeichnet,**
**dass** der Kern (6) aus einem elektrisch nichtleitenden, vorzugsweise durch Erhitzung zerstörbaren, Material besteht.

9. Vorrichtung nach einem der Ansprüche 2 bis 8,
**dadurch gekennzeichnet,**
**dass** zur Verbindung des Stempels (14) bzw. der Stempel (12; 14) mit der Stromquelle jeweils ein mit einer Vielzahl von auf seinem Umfang verteilten Kabelanschlüssen versehener Ring (27,27') vorgesehen ist, an dem der Stempel (12; 14) angebracht ist und der unter Isolierung (27;27') gegenüber der Einbauvorrichtung (28;28') an dieser angebracht ist.
